(19) Europäisches Patentamt
European Patent Office
Office européen des brevets

(11) **EP 3 529 892 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **17748774.1**

(22) Anmeldetag: **04.08.2017**

(51) Int Cl.:
***H02P 29/60*** *(2016.01)*

(86) Internationale Anmeldenummer:
**PCT/EP2017/069838**

(87) Internationale Veröffentlichungsnummer:
**WO 2018/072907 (26.04.2018 Gazette 2018/17)**

(54) **VERFAHREN ZUM TEMPERATUR-DERATING VON ELEKTRISCHEN MASCHINEN**

METHOD FOR THE TEMPERATURE DERATING OF ELECTRICAL MACHINES

PROCÉDÉ DE DÉCLASSEMENT DE TEMPÉRATURE DE MACHINES ÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.10.2016 DE 102016220536**

(43) Veröffentlichungstag der Anmeldung:
**28.08.2019 Patentblatt 2019/35**

(73) Patentinhaber: **Volkswagen Aktiengesellschaft 38440 Wolfsburg (DE)**

(72) Erfinder:
• **PAPE, Thorsten**
**34246 Vellmar (DE)**
• **KNOKE, Tobias**
**33034 Brakel-Frohnhausen (DE)**
• **WILHELM, Nils**
**34549 Edertal (DE)**

(56) Entgegenhaltungen:
**EP-A2- 2 787 588    DE-A1-102015 111 186 JP-A- 2010 119 216**

**Beschreibung**

Die Erfindung betrifft ein Verfahren zur Begrenzung der Temperatur in einer elektrischen Maschine und eine Steueranordnung zur Durchführung des Verfahrens.

Stand der Technik

Um eine thermische Überlastung einer elektrischen Maschine, beispielsweise eines Elektromotors in einem Kraftfahrzeug, zu vermeiden, ist es notwendig, die Leistung des Elektromotors bei Überschreiten einer vorbestimmten Grenztemperatur zu reduzieren. Dies geschieht üblicherweise, indem das zur Verfügung gestellte Drehmoment oder der Phasenstrom reduziert werden. Zur Temperaturentwicklung in einem Elektromotor tragen in hohem Maße Verluste, hervorgerufen durch den Ohm'schen Widerstand der Statorwicklungen, bei. Dabei hängt die Verlustleistung proportional vom Quadrat des fließenden Stromes ab. Wird vom Elektromotor ein hohes Drehmoment angefordert, fließen entsprechend höhere Ströme, in deren Folge es zu einer hohen Temperaturentwicklung im Elektromotor kommen kann. Hohe Temperaturen beispielsweise im Elektromotor können zu Schäden an den Wicklungsisolationen führen, was einen Defekt des Elektromotors zur Folge haben kann. Daher sind Verfahren notwendig, die die Leistung des Elektromotors in Abhängigkeit von der Temperatur reduzieren. Derartige Verfahren werden häufig als Temperatur-Derating bezeichnet.

Im Betrieb der elektrischen Maschine wird bei aktivem Derating das Drehmoment oder der Phasenstrom der elektrischen Maschine begrenzt.

Ein solches Verfahren zur Begrenzung der Temperatur einer elektrischen Maschine ist beispielsweise aus EP 2 787 588 A2 bekannt. Dort wird ein Überlastungsschutzsystem für elektrische Antriebe beschrieben, wobei zu jeder Komponente des Antriebs Parameter berechnet beziehungsweise gemessen werden. Zu den Parametern gibt es Größen, welche einen vorbestimmten Grenzwert nicht überschreiten dürfen. Als Parameter werden hier beispielsweise das Drehmoment oder der Strom gemessen, wobei die zugehörige Größe, die einen Grenzwert besitzt, die Temperatur sein kann.

Weiterhin wird in DE 10 2011 089 755 A1 eine Regelungsstrategie zum Betrieb eines Elektromotors beschrieben. Hier wird unter Berücksichtigung der Fahranforderung eine Reduzierung des Stator- oder Rotorstroms dazu genutzt, eine Grenztemperaturüberschreitung einzelner Komponenten des Elektromotors zu verhindern oder hinauszuzögern. Nach Überschreiten der Grenztemperatur erfolgt die Reduzierung der Motortemperatur durch Aktivierung des sogenannten Deratings.

Aus der WO 2006/065 337 A1 ist ein Überlastungsschutzsystem für elektrische Geräte bekannt, welches über temperatursensitive Elemente in der Nähe der Gerätekomponenten dessen Temperatur bestimmt. Die Erfindung bezieht sich auf Verfahren unter Verwendung einer vorhergesagten Temperatur und sieht vor, bestimmte Betriebsparameter des Elektromotors anzupassen, sobald eine bestimmte Temperatur überschritten wird. Es wird eine Voraussage über die Temperaturentwicklung gemacht, welche das Temperatur-Derating beeinflusst.

Aus der DE 10 2015 111 186 A1 ist ein Verfahren zum Betreiben einer elektrischen Maschine eines Bodenfahrzeugs bekannt, wobei ein Alterungsparameter auf der Grundlage einer Temperatur der elektrischen Maschine periodisch bestimmt wird und wobei ein kurzfristiger Alterungseffekt auf der Grundlage des periodisch bestimmten Alterungsparameters periodisch bestimmt wird.

Das Temperatur-Derating von Elektromotoren in Fahrantrieben erfolgt üblicherweise auf Basis der gemessenen Wicklungstemperatur und verhindert eine thermische Überlastung des Elektromotors, indem das zur Verfügung gestellt Drehmoment oder der Phasenstrom reduziert wird. Eine zeitliche Bewertung der Temperaturüberschreitung ist nicht bekannt.

Die Anwendung kann es erfordern, dass für das Erreichen einer Maximalspezifikation, d.h. zum Beispiel die maximale Kurzzeit-Leistung oder das maximale Kurzzeit-Drehmoment der elektrischen Maschine, kurzzeitig ein Betrieb oberhalb einer zulässigen Dauertemperatur möglich sein muss. Die Konstruktion des Elektromotors erlaubt es unter Umständen, dass kurzzeitig höhere Temperaturen als die vorgegebene maximale Dauertemperatur zulässig sind. Dies ermöglicht es, kurzzeitig trotz Überschreiten der zulässigen Dauertemperatur die volle Leistung oder sogar höhere Antriebsleistungen abzurufen. Um diese Eigenschaft zu nutzen, wird eine Derating-Strategie benötigt, die ein kurzzeitiges Überschreiten der zulässigen Dauertemperatur ermöglicht.

Darstellung der Erfindung: Aufgabe, Lösung, Vorteile

Der Erfindung liegt die Aufgabe zugrunde, ein Verfahren zum Begrenzen der Temperatur in einem elektrischen Antrieb bereitzustellen, wobei trotz Überschreiten einer festgelegten Dauertemperatur kurzzeitig das Abrufen höherer Antriebsleistungen zugelassen wird.

Die vorliegende Erfindung ist in den unabhängigen Ansprüchen definiert.

Die Erfindung sieht ein Verfahren zum Begrenzen einer Temperatur $\vartheta$ in einer elektrischen Maschine vor, wobei die Temperatur $\vartheta$ in der elektrischen Maschine bestimmt wird und nach Überschreiten einer vorbestimmten Dauertemperatur $\vartheta_{Dauer}$ eine weitere Temperaturerhöhung in einer vorbestimmten Zeit $t_{Derating}$ zugelassen wird. Nach Ablauf der vorbestimmten Zeit $t_{Derating}$ werden die Leistung P' und/oder das Drehmoment M' und/oder mindestens ein Phasenstrom I' der elektrischen Maschine verringert. Das Verfahren ist für verschiedene Arten von elektrischen Antrieben anwendbar. Hier kann das Verfahren insbesondere in Synchronmotoren, Permanentmagnet-Synchronmotoren und Asynchronmotoren eingesetzt werden.

Durch das erfindungsgemäße Verfahren kann eine vorhandene Auslegung eines elektrischen Antriebs bei Anwendungen zum Einsatz kommen, bei denen eine höhere Leistung für einen begrenzten Zeitraum benötigt wird. Wird ein Derating nach Stand der Technik verwendet, muss der elektrische Antrieb, beispielsweise der Elektromotor, hinsichtlich seiner Dauerleistung so ausgelegt werden, dass diese auch die Anforderung an kurzzeitige Leistungsspitzen erfüllt - es ist ja nicht sichergestellt, dass diese Leistungsspitzen zeitlich limitiert werden. Bei der Verwendung des erfindungsgemäßen Deratings kann die Auslegung des elektrischen Antriebs, beispielsweise des Elektromotors, kompakter erfolgen. Dadurch werden Kosten, Bauraum und Gewicht des elektrischen Antriebs reduziert.

Zur Bestimmung der Temperatur $\vartheta$ im elektrischen Antrieb kann beispielsweise ein temperatursensitives Element vorgesehen sein. Ein oder mehrere temperatursensitive Elemente können an unterschiedlichen Komponenten des elektrischen Antriebs angebracht sein, in einem Elektromotor jedoch vorzugsweise an den Statorwicklungen. Bei dem temperatursensitiven Element kann es sich um jede geeignete und nach dem Stand der Technik bekannte Temperaturmessvorrichtung handeln, so können beispielsweise Kaltleiter-Temperatursensoren, Heißleiter-Temperatursensoren oder faseroptische Temperatursensoren zum Einsatz kommen. Weiterhin sind jedoch auch andere Methoden zur Bestimmung der Temperatur anwendbar, beispielsweise basierend auf Temperaturmodellen. Die Bestimmung der Temperatur $\vartheta$ erfolgt zeitlich fortlaufend.

Für den elektrischen Antrieb erfindungsgemäß wird eine Dauertemperatur $\vartheta_{Dauer}$ bestimmt, welche die Temperatur darstellt, bis zu der ein problemloser Betrieb des elektrischen Antriebs möglich ist. Sie stellt also die Grenztemperatur dar, bis zu der ein dauerhafter Betrieb des elektrischen Antriebs möglich ist. Ein Überschreiten der Dauertemperatur $\vartheta_{Dauer}$ über einen unbegrenzten Zeitraum könnte zu einem Defekt am elektrischen Antrieb führen.

Darüber hinaus wird für den elektrischen Antrieb eine Maximaltemperatur $\vartheta_{Max}$ festgelegt, welche im Betrieb des elektrischen Antriebs nicht überschritten werden darf. Ein Überschreiten dieser Maximaltemperatur $\vartheta_{Max}$ kann zu Schäden am elektrischen Antrieb führen, beispielsweise zu Schäden an den Isolationen der Statorwicklungen in einem Elektromotor. Die Maximaltemperatur $\vartheta_{Max}$ liegt oberhalb der Dauertemperatur $\vartheta_{Dauer}$ und sollte auch kurzfristig nicht überschritten werden.

Sowohl der Wert der Dauertemperatur $\vartheta_{Dauer}$ als auch der der Maximaltemperatur $\vartheta_{Max}$ hängen von der Auslegung des elektrischen Antriebs ab. Die jeweilige Ausgestaltung des elektrischen Antriebs beeinflusst beispielsweise dessen spezifische Wärmekapazität und legt daher fest, wie die Temperatur den Betrieb des elektrischen Antriebs beeinflusst.

Mit Hilfe einer Steuerung wird eine Zeitspanne berechnet, für die ein Überschreiten der Dauertemperatur $\vartheta_{Dauer}$ zugelassen wird. Der Zeitpunkt des Ablaufens dieser Zeitspanne wird als $t_{Derating}$ bezeichnet. Das Überschreiten der Dauertemperatur $\vartheta_{Dauer}$ ist bis zum Erreichen einer weiteren Grenztemperatur $\vartheta_{Derating}$ zulässig, da die Konstruktion des elektrischen Antriebs die kurzzeitige Aufnahme einer zusätzlichen Wärmemenge erlaubt.

Im Betrieb des elektrischen Antriebs, beispielsweise in einem Kraftfahrzeug mit Elektromotor, fordert der Fahrer durch Betätigung des Fahrpedals einen Sollwert für das Drehmoment M oder die Leistung P des elektrischen Antriebs an. Die Steuerung des elektrischen Antriebs setzt diesen Sollwert für das Drehmoment in einen Ist-Wert um. Die Konstruktion des elektrischen Antriebs lässt jedoch nicht beliebige Werte für das Drehmoment zu. Während des Betriebs des elektrischen Antriebs wird fortlaufend die Temperatur $\vartheta$ im elektrischen Antrieb, beispielsweise an den Statorwicklungen eines Elektromotors, gemessen. Überschreitet die gemessene Temperatur $\vartheta$ nun die zuvor festgelegte Dauertemperatur $\vartheta_{Dauer}$ des elektrischen Antriebs, wird eine Temperaturerhöhung in einer von einer Steuerung berechneten Zeitspanne $t_{Derating}$ zugelassen, um kurzzeitig eine weitere Anforderung von Leistung an den elektrischen Antrieb zu ermöglichen. Dies bedeutet, dass weiterhin die vom Fahrer durch Betätigung des Fahrpedals angeforderte Leistung P (oder Drehmoment M) beziehungsweise der Soll-Wert für das Drehmoment weiterhin in einen Ist-Wert für das Drehmoment M' umgesetzt wird. Nach Ablauf dieser Zeitspanne tritt das Temperatur-Derating ein, und es werden die Leistung P' und/oder das Drehmoment M' und/oder mindestens ein Phasenstrom I' des elektrischen Antriebs verringert.

Erfindungsgemäß sind zur Reduzierung der Leistung P' und/oder des Drehmoments M' und/oder des mindestens eines Phasenstroms I' des elektrischen Antriebs folgende Schritte vorgesehen:

Es wird die Temperatur $\vartheta$ der elektrischen Maschine in einer bestimmten zeitlichen Abfolge gemessen. Anschließend wird die Temperaturdifferenz $\Delta\vartheta$ zwischen der gemessenen Temperatur $\vartheta$ und der zuvor bestimmten Dauertemperatur $\vartheta_{Dauer}$ zu jedem Punkt der zeitlichen Abfolge bestimmt.

Der Wert der Temperaturdifferenz $\Delta\vartheta$ wird jeweils mit einem festgelegten Faktor K multipliziert. Der Faktor K kann als eine Verstärkung verstanden werden, die das maschinenspezifische Verhalten in Bezug auf Wärmeaufnahme und -abgabe widerspiegelt und somit beispielsweise von der spezifischen Wärmekapazität der elektrischen Maschine abhängt. Daher handelt es sich hierbei auch um einen für den jeweiligen Maschinentyp charakteristischen Wert.

Die Werte aus den Produkten aus der Temperaturdifferenz $\Delta\vartheta$ und dem Faktor K, die zu jedem Punkt der zeitlichen Abfolge der Temperaturbestimmung bestimmt wurden, werden über die Zeit integriert.

Ähnlich dem Integral des quadrierten Stromes über die Zeit bei elektrischen Sicherungen wird hier eine auf Integration basierende Maßnahme umgesetzt, die zu einem Derating nach einer errechneten Zeit führt.

Aus dem zeitabhängigen Integralwert und der Ist-Temperatur wird ein Faktor F berechnet Dieser Wert wird als sogenannter Derating-Faktor bezeichnet. Der Faktor F wird mit dem ohne Berücksichtigung der Maschinentemperatur gewünschten Drehmoment M' und/oder dem Phasenstrom I' der elektrischen Maschine multipliziert, das beispielsweise aus der Fahranforderung des Fahrpedals resultiert. Das Produkt wird anschließend als Stellgröße der elektrischen Maschine zugeführt.

Im Betrieb der elektrischen Maschine wird bei aktivem Derating das Drehmoment M' oder der Phasenstrom I' der elektrischen Maschine auf einen Maximalwert begrenzt. Eine mögliche Realisierungsform ist die Multiplikation des resultierenden Derating-Faktors F beispielsweise mit dem maximal zulässigen Drehmoment im Grundstellbereich oder dem maximal zulässigen Drehmoment bei aktueller Drehzahl oder mit dem maximal zulässigen Phasenstrom.

Die Berechnung des Faktors F ist derart ausgelegt, dass durch die daraus resultierende Leistungsreduktion die notwendige Temperaturreduktion durch Reduktion des Wärmeeintrages herbeigeführt wird, sodass ein Überschreiten der Maximaltemperatur $\vartheta_{Max}$ verhindert wird. Darüber hinaus ist der Wertebereich des Faktors F begrenzt durch eine untere Grenze $F_{min}$ und eine obere Grenze $F_{max}$. Innerhalb der Grenzen des Wertebereichs kann der Faktor F beliebige Werte annehmen, allerdings darf der Wert des Faktors F keine zeitlichen Sprünge aufweisen. Eine sprunghafte Änderung des Faktors F würde zu einer abrupten Leistungsreduzierung der elektrischen Maschine führen, was zu unerwünschtem Fahrverhalten führen kann.

Vorteilhafte Ausgestaltungen der Erfindung sind in den Unteransprüchen gekennzeichnet.

Gemäß einer zweckmäßigen Ausgestaltung ist vorgesehen, dass der Faktor F bei Erreichen der festgelegten Maximaltemperatur $\vartheta_{Max}$ den Wert 0 aufweist und somit die zugeführte Verlustleistung minimiert. Dadurch ist gewährleistet, dass die maximal zulässige Temperatur in der elektrischen Maschine, die zu einem Defekt der elektrischen Maschine führen könnte, nicht überschritten werden kann.

Eine weitere vorteilhafte Ausgestaltung sieht vor, dass der Faktor F für gemessene Temperaturen, die kleiner oder gleich der Dauertemperatur sind, den Wert 1 besitzt. Dies hat zur Folge, dass für Temperaturen kleiner oder gleich der Dauertemperatur keine Reduzierung der Leistung P' und/oder des Drehmoments M' und/oder mindestens eines Phasenstroms I' der elektrischen Maschine stattfindet, da für diese Fälle jeweils eine Multiplikation des aktuellen Wertes für das Drehmoment M' beziehungsweise den Phasenstrom I' mit dem Wert 1 stattfindet. In diesem Fall befindet sich die elektrische Maschine außerhalb des Derating-Bereiches für das Drehmoment M' bzw. die Phasenströme I'.

Der Faktor K, mit dem die Temperaturdifferenz $\Delta\vartheta$ an den einzelnen Punkten der zeitlichen Abfolge multipliziert wird, kann wie folgt ausgelegt werden. Innerhalb der Zeit $t_1$ soll sich der Integrator auf den Wert 1 aufladen, wenn die Ist-Temperatur konstant $\vartheta_{Derating}$ beträgt. Unter dieser Bedingung gilt folgender Zusammenhang:

$$K = \int_0^{t_1} (\vartheta_{derating} - \vartheta_{Dauer})\, dt = 1$$

Daraus lässt sich ein Wert für den Faktor K berechnen:

$$K = \frac{1}{(\vartheta_{derating} - \vartheta_{Dauer})t_1}$$

Da in dem Faktor K lediglich maschinenspezifische Auslegungsgrößen einfließen, hat auch der Faktor K jeweils einen maschinenspezifischen Wert. Der Faktor K kann als eine Verstärkung verstanden werden, die das Verhalten der elektrischen Maschine bezüglich der Aufnahme beziehungsweise der Abgabe von Wärme berücksichtigt.

Durch die Multiplikation der Temperaturdifferenz $\Delta\vartheta$ aus der bestimmten Temperatur $\vartheta$ und der Dauertemperatur $\vartheta_{Dauer}$ kann diese unterschiedlich gewichtet werden. Ist der Wert der Temperaturdifferenz $\Delta\vartheta$ positiv, ist die bestimmte Temperatur $\vartheta$ also größer als die Dauertemperatur $\&_{Dauer}$, dann kann ein Wert $K_1$ gewählt werden, der die Verstärkung für positive Eingangswerte am Integrator der Steuerungsschaltung der elektrischen Maschine festlegt. Ist der Wert der Temperaturdifferenz $\Delta\vartheta$ negativ, ist die bestimmte Temperatur $\vartheta$ kleiner als die Dauertemperatur $\&_{Dauer}$. Um während des Abkühlprozesses der elektrischen Maschine nach dem Überschreiten der Dauertemperatur $\vartheta_{Dauer}$ den Wert der Integration schnell wieder zu verringern, kann für negative Temperaturdifferenz $\Delta\vartheta$ ein zweiter Wert $K_2$ für die Verstärkung gewählt werden. Jedoch können $K_1$ und $K_2$ auch den gleichen Wert besitzen.

Gemäß einer weiteren zweckmäßigen Ausgestaltung ist vorgesehen, dass der Wert der Integration mindestens 0 und höchstens 2 beträgt.

Weiterhin ist vorgesehen, dass durch eine entsprechende steuerungstechnische Implementierung der Wertebereich des Faktors F auf 0 bis 1 beschränkt wird. Dies wird durch eine Vorrichtung in der Steuerung erreicht, die zunächst eine Beschränkung der Werte auf den Bereich von 1 bis 2 vornimmt und den resultierenden Wert anschließend vom Wert 2 abzieht. Das bedeutet, dass ein hoher Wert der Integration, was einer hohen Temperaturüberschreitung der Dauertemperatur $\vartheta_{Dauer}$ entspricht, in einem niedrigen Wert für den Faktor F bezogen auf dessen Wertebereich resultiert. Durch die anschließende Multiplikation des Faktors F mit dem Sollwert des Drehmoments M' und/oder mindestens eines der Phasenströme I' ergeben sich entsprechend niedrige Werte für das aktuelle Drehmoment M" und/oder mindestens einen der Phasenströme I". Dadurch wird erreicht, dass bei hoher Temperaturüberschreitung die Leistung P' der elektrischen Maschine entsprechend stark reduziert wird, um die Generierung weiterer Wärme zu verhindern und ein Abkühlen der elektrischen Maschine zu ermöglichen. Analog dazu ergeben sich entsprechend für niedrige Werte der Integration große Werte für den Faktor F, was nach der Multiplikation mit Sollwert des Drehmoments M' und/oder mindestens eines der Phasenströme I' zu einem nur wenig reduzierten neuen Wert für das Drehmoment M" und/oder den mindestens einen Phasenstrom I" führt. In diesem Fall liegt nur eine geringe Überschreitung der Dauertemperatur $\vartheta_{Dauer}$ vor, sodass die Leistung P' der elektrischen Maschine nur entsprechend wenig reduziert werden muss.

Eine alternative Ausführungsform sieht ein Verfahren zur Begrenzung der Temperatur in einer elektrischen Maschine vor, wobei ab dem Zeitpunkt des (erstmaligen) Überschreitens der Dauertemperatur $\vartheta_{Dauer}$ mittels eines Zeitzählers der Ablauf der Zeit $t_{Derating}$ bestimmt wird, und nach Ablauf der Zeit $t_{Derating}$ die Leistung P' und/oder das Drehmoment M' und/oder mindestens ein Phasenstrom I' reduziert wird. In dieser Variante ist $t_{Derating}$ ein fixer Zeitwert und ein maschinenspezifische Auslegungsparameter (anstelle von K bzw. $t_1$ der zuvor beschriebenen Variante).

Gemäß einer weiteren vorteilhaften Ausgestaltung des Verfahrens kann ein Fahrer in einem Kraftfahrzeug mit einer mit dem angegebenen Verfahren gesteuerten elektrischen Maschine über eine Anzeige darüber informiert werden, ob das zeitbasierte Temperatur-Derating bereits eingesetzt hat und wie stark die Leistung P" bzw. das Drehmoment M" und die Phasenströme I" zum aktuellen Zeitpunkt bereits reduziert sind. Dadurch hat der Fahrer die Möglichkeit, sein Fahrverhalten gegebenenfalls anzupassen und wird nicht vom eintretenden Leistungsabfall bei Dauertemperaturüberschreitung überrascht. Es kann auch vorteilhaft sein, bereits im Vorfeld des Eingreifens dem Fahrer eine Information zu geben: Sobald der Integrator einen Wert ungleich null aufweist, weiß man, dass die Dauertemperatur überschritten ist und sehr bald das zeitbasierte Derating einsetzen wird. So kann der Fahrer vorgewarnt werden, dass er in den nächsten Sekunden/Minuten mit Leistungsabfall zu rechnen hat.

Darüber hinaus betrifft die Erfindung eine Steueranordnung zur Umsetzung eines Verfahrens zur Begrenzung der Temperatur in einer elektrischen Maschine mit dem zuvor beschriebenen Ablauf.

Diese Steueranordnung weist eine Einheit zur Bestimmung der Temperatur in einer bestimmten zeitlichen Abfolge auf, sowie eine Steuereinheit zur Bestimmung der Temperaturdifferenz. Weiterhin ist eine Steuereinheit zur Multiplikation der Temperaturdifferenz mit dem Faktor K sowie eine Steuereinheit zur Integration dieser Werte vorgesehen. Eine weitere Steuereinheit der Steueranordnung begrenzt die Werte des Faktors K auf einen Wertebereich von 0 bis 2, und eine weitere Steuereinheit dient dazu, die Werte des Faktors F anschließend auf den Wertebereich von 0 bis 1 zu beschränken.

Der Faktor F wird mittels einer entsprechenden Steuereinheit mit dem ohne Berücksichtigung der Maschinetemperatur gewünschten Drehmoment M' und/oder dem Phasenstrom I' der elektrischen Maschine multipliziert, das beispielsweise aus der Fahranforderung des Fahrpedals resultiert. Das Produkt wird anschließend über eine geeignete Steuereinheit als Stellgröße der elektrischen Maschine zugeführt.

Gemäß einer weiteren vorteilhaften Ausführung ist das Verfahren weiterhin dadurch gekennzeichnet, dass für die Berechnung von F eine obere und einer untere Kennlinie von F in Abhängigkeit von der Temperatur $\vartheta$ vorgesehen ist, welche die Werte von F gemäß der folgenden Fallunterscheidung begrenzt:

$$F = \begin{cases} F_{max} & F_t > F_{max} \\ F_t & sonst \\ F_{min} & F_t < F_{min} \end{cases}$$

Durch diese Fallunterscheidung gibt es zwei Kennlinien für F, welche einen Bereich zwischen diesen beiden Kennlinien festlegt, in dem mögliche Werte von F liegen können.

Die Erfindung betrifft darüber hinaus ein Kraftfahrzeug, welches eine Steueranordnung mit den zuvor beschriebenen Merkmalen aufweist.

Bevorzugte Ausführungsform der Erfindung

Ein Ausführungsbeispiel der Erfindung wird nachstehend anhand der Abbildungen näher erläutert. Es zeigt

Fig. 1 ein Blockschaltbild mit Funktionsblöcken zur Begrenzung der Temperatur in einem elektrischen Antrieb,

Fig. 2 ein Diagramm, in dem der Faktor F in Abhängigkeit von der Temperatur $\vartheta$ unter Berücksichtigung der Fallunterscheidung von $F_{min}$ und $F_{max}$ dargestellt ist, und

Fig. 3 ein Diagramm, in dem der Faktor Ft in Abhängigkeit von der Zeit dargestellt ist.

Im Fahrbetrieb wird aus der Fahranforderung des Fahrers, die durch die Pedalstellung vorgegeben wird, mithilfe einer Steuereinheit (19) ein Sollwert für Drehmoment (M) und/oder eine Leistung (P) und/oder mindestens ein Phasenstrom (I) elektrischen Maschine (18) berechnet. In einer Steuereinheit (20) wird der Wunschwert der Fahranforderung in Werte für das Drehmoment (M') und/oder die Leistung (P') und/oder den Phasen Strom (I') begrenzt, welche die maximal zulässigen Werte der Stellgrößen berücksichtigen.

Mithilfe einer Steuereinheit (10) zur Bestimmung der Temperatur innerhalb der Steueranordnung (100) wird die Temperatur $\vartheta$ im elektrischen Antrieb bestimmt. Die Temperatur kann beispielsweise mithilfe eines Sensors gemessen werden oder mithilfe von Temperaturmodellen, die für den jeweiligen Maschinentyp vorab erstellt und in der Steueranordnung (100) der elektrischen Maschine hinterlegt werden, bestimmt werden. Die Bestimmung der Temperatur $\vartheta$ erfolgt in einer bestimmten zeitlichen Abfolge.

Zu jedem gemessenen Temperaturwert $\vartheta$ wird die Temperaturdifferenz $\Delta\vartheta$ zu einer zuvor festgelegten Dauertemperatur $\vartheta_{Dauer}$ bestimmt, welche in der Steueranordnung (100) hinterlegt ist. Die Berechnung der Temperaturdifferenz $\Delta\vartheta$ erfolgt in einer Steuereinheit (11) zur Bestimmung der Temperaturdifferenz $\Delta\vartheta$ in der Steueranordnung (100).

Der jeweilige Wert für die Temperaturdifferenz $\Delta\vartheta$ wird an eine Steuereinheit (12) zur Multiplikation mit dem Faktor K (12) der Steueranordnung (100) übergeben, wo das Produkt aus der Temperaturdifferenz $\Delta\vartheta$ und dem Faktor K bestimmt wird. Die errechneten Produkte werden in eine Steuereinheit (13) zur Integration der Produkte aus dem Faktor K und der Temperaturdifferenz $\Delta\vartheta$ geleitet. Der Wert der Integration wird auf den Bereich von 0 bis 2 begrenzt.

Eine Steuereinheit (14) zur weiteren Begrenzung des Wertes der Integration legt den Bereich zwischen 1 und 2 fest und zieht den resultieren Wert von 2 ab. Das Ergebnis ist ein Wert für Ft, der zwischen null und eins liegt und an eine weitere Steuereinheit (15) übergeben wird, welche den zeitabhängigen Wert Ft auf Werte zwischen $F_{min}$ und $F_{max}$ begrenzt.

Die Steueranordnung (100) umfasst eine Steuereinheit (15) zur Berechnung des Faktors F auf Basis des Ausgangswertes der Steuereinheit (14) zur Begrenzung des Wertes der Integration. Innerhalb der Steuereinheit (15) zur Begrenzung des zeitabhängigen Wertes Ft auf Werte zwischen $F_{min}$ und $F_{max}$. Der Ausgangswert der Steuereinheit (15) ist der Faktor F, welcher an die Steuereinheit (16) übergeben wird, welche den Faktor F mit dem Ist-Wert des Drehmoments (M') und/oder der Leistung (P') und/oder mindestens einem Phasenstrom (I') der elektrischen Maschine multipliziert. Das Ergebnis der Multiplikation wird an eine Regelungseinheit (17) übergeben, welche diese Werte als neuen Wert für das Drehmoment (M") und/oder die Leistung (P") und/oder den Phasenstrom (I") der elektrischen Maschine (18) umsetzt.

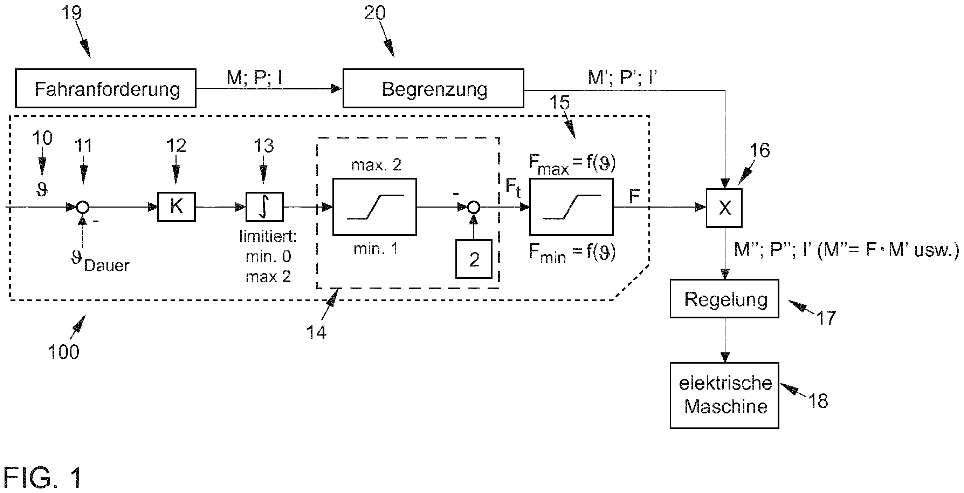

Die Größen M", P" und I" stellen die Werte für das Drehmoment, die Leistung und den Phasenstrom dar, welche bereits durch die Stellgrößenbeschränkung der Steuereinheit (20) begrenzt wurden, und nun zusätzlich unter Berücksichtigung der Motortemperatur $\vartheta$ eingeschränkt wurden. Die gesamte Anordnung der Figur 1 mit Ausnahme der elektrischen Maschine (18) sind ein Teil der Leistungselektronik, die die elektrische Maschine auf die Werte M", P" und I" regelt.

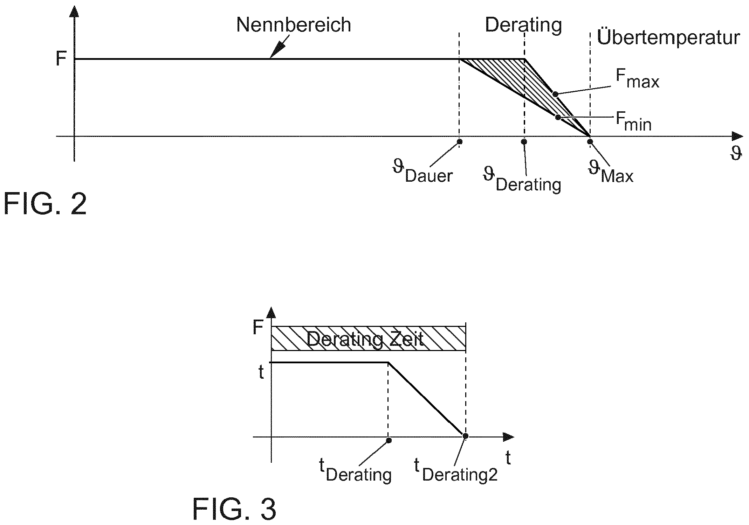

Figur 2 zeigt den Verlauf von F in Abhängigkeit von der Temperatur $\vartheta$. Liegt $\vartheta$ unterhalb der Dauertemperatur $\vartheta_{Dauer}$ befindet sich die elektrische Maschine im Nennbereich und es findet kein Derating statt. In diesem Bereich hat F den Wert 1. Nach Überschreiten der Dauertemperatur $\vartheta_{Dauer}$ hat F weiterhin den Wert 1 bis zum Erreichen der Derating-Temperatur $\vartheta_{Derating}$, sofern die zeitliche Bewertung der Temperaturüberschreitung noch nicht eingreift. Dies ist der Bereich, in dem weiterhin hohe Antriebsleistungen von der elektrischen Maschine angefordert werden können. Ausgehend von der Dauertemperatur $\vartheta_{Dauer}$ kann F jeden Verlauf zwischen den Kurven folgend $F_{min}$ und $F_{max}$ annehmen. Um das Überschreiten der Maximaltemperatur $\vartheta_{Max}$ zu hindern, muss F beim Erreichen dieser Temperatur den Wert 0 haben.

In Figur 3 ist die Abhängigkeit des Faktors Ft von der Zeit t dargestellt. Bei erstmaliger Überschreitung von $\vartheta_{Dauer}$ beginnt die Derating-Zeit abzulaufen, wobei sich die Länge dieser Zeit implizit über den Auslegungsparameter K ergibt. Bis zum Zeitpunkt $t_{Derating}$, welcher innerhalb des markierten Abschnitts "Derating-Zeit" liegt, ist der Wert des Faktors Ft gleich 1. Zwischen der Zeit $t_{Derating}$ und $t_{Derating2}$ findet die Reduzierung des Faktors $F_t$ statt, wodurch der Faktor F den in Figur 2 dargestellten Verlauf von $F_{max}$ verlässt (es tritt der Fall ein, dass Ft größer als $F_{min}$ und kleiner als $F_{max}$ ist, woraus F = Ft folgt) und nicht-sprungförmig auf einen Punkt der Kennlinie $F_{min}$ überführt wird. Der zeitliche Verlauf von F weist daher keine Sprungstellen auf.

## Bezugszeichenliste

100 Steueranordnung
10 Steuereinheit zur Bestimmung der Temperatur
11 Steuereinheit zur Bestimmung der Temperaturdifferenz
12 Steuereinheit zur Multiplikation mit dem Faktor K
13 Steuereinheit zur Integration des Produkts aus dem Faktor K und der Temperaturdifferenz
14 Steuereinheit zur Begrenzung des Wertes der Integration einschließlich Durchführung einer Subtraktion mit einer Konstanten
15 Steuereinheit, die den zeitabhängigen Wert Ft auf Werte zwischen $F_{min}$ und $F_{max}$ begrenzt
16 Steuereinheit zur Multiplikation des Faktors F mit dem Ist-Wert des Drehmoments und/oder der Leistung und/oder mindestens einem Phasenstrom der elektrischen Maschine

17 Regelungseinheit zum Umsetzen des Wertes, der sich aus der Multiplikation des Faktors F mit dem aktuellen Wert des Drehmoments und/oder mindestens eines Phasenstroms der elektrischen Maschine ergibt, als neuer Wert für das Drehmoment und/oder dem mindestens ein Phasenstrom der elektrischen Maschine

18 elektrische Maschine

19 Steuereinheit, die aus der Fahranforderung ein Drehmoment und/oder eine Leistung und/oder mindestens einen Phasenstrom elektrischen Maschine berechnet

20 Steuereinheit zur Begrenzung eines Wunschwertes der Fahranforderung auf einen Wert, der sich unter Berücksichtigung einer Stellgrößenbeschränkung ergibt.

**Patentansprüche**

1. Verfahren zum Begrenzen einer Temperatur $\vartheta$ in einer elektrischen Maschine (18),

   - wobei die Temperatur $\vartheta$ in der elektrischen (18) Maschine bestimmt wird,
   - wobei nach Überschreiten einer festgelegten Dauertemperatur $\vartheta_{Dauer}$ eine weitere Temperaturerhöhung in einer von einer Steuerung berechneten Zeitspanne ($t_{Derating}$) zugelassen wird, und
   - wobei nach Ablauf dieser Zeitspanne ($t_{Derating}$) die Leistung und/oder das Drehmoment und/oder mindestens ein Phasenstrom der elektrischen Maschine (18) verringert wird,
   - **gekennzeichnet dadurch, daß** die Reduzierung der Leistung und/oder des Drehmoments und/oder des mindestens einen Phasenstroms der elektrischen Maschine (18) folgende Schritte umfasst:

     - Messung der Temperatur $\vartheta$ in der elektrischen Maschine (18) in einer bestimmten zeitlichen Abfolge
     - Bestimmung der Temperaturdifferenz $\Delta\vartheta$ zwischen der gemessenen Temperatur $\vartheta$ und der Dauertemperatur $\vartheta_{Dauer}$ in einer bestimmten zeitlichen Abfolge
     - Multiplikation jedes Wertes der Temperaturdifferenz $\Delta\vartheta$ mit einem Faktor K
     - Integration der Werte des Produkts aus der Temperaturdifferenz $\Delta\vartheta$ und dem Faktor K
     - Berechnung eines Faktors F, der mit dem Wert der Integration assoziiert bzw. berechnet wird
     - Multiplikation des Faktors F mit dem aktuellen Betrag der Leistung und/oder des Drehmoments und/oder mindestens eines Phasenstroms der elektrischen Maschine (18) und
     - Umsetzen des Wertes, der sich aus der Multiplikation ergibt, als neuer Wert für das Drehmoment und/oder den mindestens einen Phasenstrom der elektrischen Maschine (18).

2. Verfahren nach Anspruch 1, wobei der Faktor F bei Erreichen einer vorbestimmten Maximaltemperatur $\vartheta_{Max}$ den Wert 0 aufweist.

3. Verfahren nach Anspruch 1 oder 2, wobei der Faktor F gleich 1 ist, solange die gemessene Temperatur $\vartheta$ kleiner ist als die Dauertemperatur $\vartheta_{Dauer}$ oder gleich der Dauertemperatur $\vartheta_{Dauer}$ ist.

4. Verfahren nach einem der Ansprüche 1 bis 3, wobei die Werte der Temperaturdifferenz $\Delta\vartheta$ vor der Integration mit dem Faktor K multipliziert werden, welcher sich wie folgt berechnet:

$$K = \frac{1}{(\vartheta_{derating} - \vartheta_{Dauer})t_1}$$

wobei $\vartheta_{Derating}$ eine Temperatur darstellt und $t_1$ eine Zeit darstellt, wobei beide Größen maschinenspezifische Auslegungsparameter sind.

5. Verfahren nach Anspruch 4, wobei der Faktor K für positive Temperaturdifferenzen $\Delta\vartheta$ einen Wert $K_1$ aufweist und für negative Temperaturdifferenzen einen Wert $K_2$ aufweist.

6. Verfahren nach einem der Ansprüche 1 bis 5, wobei der Wert der Integration mindestens 0 und höchstens 2 beträgt.

7. Steueranordnung (100) zur Umsetzung eines Verfahrens nach einem der Ansprüche 1 bis 6, aufweisend

   - eine Steuereinheit (10) zur Bestimmung der Temperatur $\vartheta$ (11) in einer bestimmten zeitlichen Abfolge,
   - eine Steuereinheit (11) zur Bestimmung der Temperaturdifferenz $\Delta\vartheta$ in einer bestimmten zeitlichen Abfolge,
   - eine Steuereinheit (12) zur Multiplikation der Temperaturdifferenz mit dem Faktor K,
   - eine Steuereinheit (13) zur Integration der Produkte aus dem Faktor K und der Temperaturdifferenz $\Delta\vartheta$,
   - eine Steuereinheit (14) zur Begrenzung der Werte der Integration auf den Wertebereich von 0 bis 2,

- eine Steuereinheit (15), die den zeitabhängigen Wert $F_t$ auf Werte zwischen $F_{min}$ und $F_{max}$ begrenzt,
- eine Steuereinheit (16) zur Multiplikation des Faktors F mit dem Ist-Wert des Drehmoments und/oder der Leistung und/oder mindestens einem Phasenstrom der elektrischen Maschine,
- eine Regelungseinheit (17) zum Umsetzen des Wertes, der sich aus der Multiplikation des Faktors F mit dem aktuellen Wert des Drehmoments und/oder mindestens eines Phasenstroms der elektrischen Maschine ergibt, als neuer Wert für das Drehmoment und/oder dem mindestens ein Phasenstrom der elektrischen Maschine (18),
- eine Steuereinheit (19), die aus der Fahranforderung ein Drehmoment und/oder eine Leistung und/oder mindestens einen Phasenstrom elektrischen Maschine (18) berechnet,
- eine Steuereinheit (20) zur Begrenzung eines Wunschwertes der Fahranforderung in einen Wert, der sich unter Berücksichtigung einer Stellgrößenbeschränkung ergibt.

8. Kraftfahrzeug mit einer Steueranordnung (100) nach Anspruch 7

**Claims**

1. Method for limiting a temperature $\vartheta$ in an electrical machine (18),

   - wherein the temperature $\vartheta$ in the electrical machine (18) is determined,
   - wherein, after a defined permanent temperature $\vartheta_{Permanent}$ is exceeded, a further temperature increase in a time period ($t_{Derating}$) calculated by a controller is permitted, and
   - wherein, after this time period ($t_{Derating}$) elapses, the power and/or the torque and/or at least one phase current of the electrical machine (18) are/is reduced,
   - **characterized in that**

   the reduction in the power and/or the torque and/or the at least one phase current of the electrical machine (18) comprises the following steps:

   - measuring the temperature $\vartheta$ in the electrical machine (18) in a specific time sequence,
   - determining the temperature difference $\Delta\vartheta$ between the measured temperature $\vartheta$ and the permanent temperature $\vartheta_{Permanent}$ in a specific time sequence,
   - multiplying each value of the temperature difference $\Delta\vartheta$ by a factor K,
   - integrating the values of the product of the temperature difference $\Delta\vartheta$ and the factor K,
   - calculating a factor F which is associated or calculated with the value of the integration,
   - multiplying the factor F by the current magnitude of the power and/or the torque and/or at least one phase current of the electrical machine (18), and
   - realizing the value which results from the multiplication as a new value for the torque and/or the at least one phase current of the electrical machine (18).

2. Method according to Claim 1, wherein the factor F has the value 0 when a predetermined maximum temperature $\vartheta_{Max}$ is reached.

3. Method according to Claim 1 or 2, wherein the factor F is equal to 1 provided that the measured temperature $\vartheta$ is less than the permanent temperature $\vartheta_{Permanent}$ or equal to the permanent temperature $\vartheta_{Permanent}$.

4. Method according to one of Claims 1 to 3, wherein the values for the temperature difference $\Delta\vartheta$ are multiplied by the factor K before the integration, which factor K is calculated as follows:

$$K = \frac{1}{(\vartheta_{Derating} - \vartheta_{Permanent})t_1}$$

   where $\vartheta_{Derating}$ represents a temperature and $t_1$ represents a time, wherein both variables are machine-specific design parameters.

5. Method according to Claim 4, wherein the factor K has a value $K_1$ for positive temperature differences $\Delta\vartheta$ and a value $K_2$ for negative temperature differences.

6. Method according to one of Claims 1 to 5, wherein the value of the integration is at least 0 and at most 2.

7. Control arrangement (100) for implementing a method according to one of Claims 1 to 6, having

   - a control unit (10) for determining the temperature $\vartheta$ (11) in a specific time sequence,
   - a control unit (11) for determining the temperature difference $\Delta\vartheta$ in a specific time sequence,
   - a control unit (12) for multiplying the temperature difference by the factor K,
   - a control unit (13) for integrating the products from the factor K and the temperature difference $\Delta\vartheta$,
   - a control unit (14) for limiting the values of the integration to the value range of from 0 to 2,
   - a control unit (15) which limits the time-dependent value $F_t$ to values of between $F_{min}$ and $F_{max}$,

- a control unit (16) for multiplying the factor F by the actual value of the torque and/or the power and/or at least one phase current of the electrical machine,
- a regulation unit (17) for realizing the value which results from the multiplication of the factor F by the current value of the torque and/or at least one phase current of the electrical machine as a new value for the torque and/or the at least one phase current of the electrical machine (18),
- a control unit (19) which, from the driving request, calculates a torque and/or a power and/or at least one phase current of the electrical machine (18),
- a control unit (20) for limiting a desired value for the driving request to a value which results from taking into account an actuating variable restriction.

8. Motor vehicle comprising a control arrangement (100) according to Claim 7.


**Revendications**

1. Procédé permettant de limiter une température $\vartheta$ dans une machine électrique (18),

   - dans lequel la température $\vartheta$ est déterminée dans la machine électrique (18),
   - dans lequel, une fois qu'une température continue définie $\vartheta_{Dauer}$ a été dépassée, une autre augmentation de température est autorisée au cours d'un intervalle de temps calculé par une commande ($t_{Derating}$), et
   - dans lequel, une fois cet intervalle de temps ($t_{Derating}$) écoulé, la puissance et/ou le couple et/ou au moins un courant de phase de la machine électrique (18) est réduit,
   - **caractérisé en ce que**

   la réduction de la puissance et/ou du couple et/ou dudit au moins un courant de phase de la machine électrique (18) comprend les étapes consistant à :

   - mesurer la température dans la machine électrique (18) selon une séquence temporelle déterminée
   - déterminer la différence de température $\Delta\vartheta$ entre la température mesurée $\vartheta$ et la température continue $\vartheta_{Dauer}$ d'une séquence temporelle déterminée
   - multiplier chaque valeur de la différence de température $\Delta\vartheta$ par un facteur K
   - intégrer les valeurs du produit de la différence de température $\Delta\vartheta$ par le facteur K
   - calculer un facteur F qui est associé à la valeur de l'intégration ou calculé

   - multiplier le facteur F par la valeur actuelle de la puissance et/ou du couple et/ou d'au moins un courant de phase de la machine électrique (18) et
   - convertir la valeur qui résulte de la multiplication en une nouvelle valeur du couple et/ou dudit au moins un courant de phase de la machine électrique (18).

2. Procédé selon la revendication 1, dans lequel le facteur F présente la valeur 0 lorsqu'une température maximale prédéterminée $\vartheta_{Max}$ est atteinte.

3. Procédé selon la revendication 1 ou 2, dans lequel le facteur F est égal à 1 tant que la température mesurée $\vartheta$ est inférieure à la température continue $\vartheta_{Dauer}$ ou égale à la température continue $\vartheta_{Dauer}$.

4. Procédé selon l'une des revendications 1 à 3, dans lequel les valeurs de la différence de température $\Delta\theta$ avant l'intégration sont multipliées par le facteur K, qui est calculé comme suit :

$$K = \frac{1}{(\vartheta_{derating} - \vartheta_{Dauer})t_1}$$

où $\vartheta_{Derating}$ représente une température et $t_1$ représente un temps, les deux grandeurs étant des paramètres de conception spécifiques à la machine.

5. Procédé selon la revendication 4, dans lequel le facteur K présente une valeur $K_1$ pour des différences de température positives $\Delta\vartheta$ et une valeur $K_2$ pour des différences de température négatives.

6. Procédé selon l'une des revendications 1 à 5, dans lequel la valeur de l'intégration est au moins égale à 0 et au plus égale à 2.

7. Dispositif de commande (100) permettant de mettre en œuvre un procédé selon l'une des revendications 1 à 6, comportant

   - une unité de commande (10) permettant de déterminer la température $\vartheta$ (11) selon une séquence temporelle spécifique,
   - une unité de commande (11) permettant de déterminer la différence de température $\Delta\vartheta$ selon une séquence temporelle déterminée,
   - une unité de commande (12) permettant de multiplier la différence de température $\Delta\vartheta$ par le facteur K,
   - une unité de commande (13) permettant d'intégrer les produits du facteur K par la différence de température $\Delta\vartheta$,
   - une unité de commande (14) permettant de limiter les valeurs de l'intégration à la plage de valeurs de 0 à 2,

- une unité de commande (15) qui limite la valeur dépendant du temps $F_t$ à des valeurs comprises entre $F_{min}$ et $F_{max}$,

- une unité de commande (16) permettant de multiplier le facteur F par la valeur réelle du couple et/ou de la puissance et/ou d'au moins un courant de phase de la machine électrique,

- une unité de régulation (17) permettant de convertir la valeur résultant de la multiplication du facteur F par la valeur actuelle du couple et/ou d'au moins un courant de phase de la machine électrique en une nouvelle valeur du couple et/ou dudit au moins un courant de phase de la machine électrique (18),

- une unité de commande (19) qui calcule un couple et/ou une puissance et/ou au moins un courant de phase de la machine électrique (18) à partir de l'exigence de conduite,

- une unité de commande (20) permettant de limiter une valeur souhaitée de l'exigence de conduite à une valeur obtenue lors de la prise en compte d'une limitation de la grandeur de réglage.

8. Véhicule à moteur comportant un dispositif de commande (100) selon la revendication 7.

FIG. 1

EP 3 529 892 B1

Nennbereich   Derating   Übertemperatur

F

$F_{max}$

$F_{min}$

$\vartheta$

$\vartheta_{Dauer}$   $\vartheta_{Derating}$   $\vartheta_{Max}$

FIG. 2

F

Derating Zeit

t

$t_{Derating}$   $t_{Derating2}$   t

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2787588 A2
- DE 102011089755 A1
- WO 2006065337 A1
- DE 102015111186 A1